Europäisches Patentamt

European Patent Office

Office européen des brevets

(19)

(11) Veröffentlichungsnummer: **0 140 040**
**A1**

## (12) EUROPÄISCHE PATENTANMELDUNG

(21) Anmeldenummer: **84110502.6**

(22) Anmeldetag: **04.09.84**

(51) Int. Cl.⁴: **H 04 M 1/64**
**H 04 M 11/10**

(30) Priorität: **16.09.83 DE 3333510**

(43) Veröffentlichungstag der Anmeldung:
**08.05.85 Patentblatt 85/19**

(84) Benannte Vertragsstaaten:
**AT CH DE FR GB IT LI NL SE**

(71) Anmelder: **Wolf, Michael**
**An der Ziegelhütte 5**
**D-7100 Heilbronn-Sontheim(DE)**

(72) Erfinder: **Wolf, Michael**
**An der Ziegelhütte 5**
**D-7100 Heilbronn-Sontheim(DE)**

(74) Vertreter: **Jeser, Jean-Pierre**
**Lerchenstrasse 56**
**D-7100 Heilbronn(DE)**

(54) **Telefongespräch-Aufzeichnungsgerät.**

(57) Bei einer Anschlußschaltung zum Verbinden eines Aufzeichnungsgerätes (25) mit einem Telefon (14) ist ein Relais (23) direkt in eine Amtsleitung (La) geschaltet. Sowie der Telefonhörer (17) abgenommen wird und dadurch ein Gabelschalter (18) schließt, schließt auf Grund einer im Fernmeldeam (11) vorhandenen Batterie (15) ein Gleichstrom, wodurch das Relais 23 schließt und den Antrieb des Aufnahmegerätes in Gang setzt. Durch einen zwischen die Amtsleitungen (La und Lb) geschalteten Gesprächsübertrager (26) ist es möglich, das empfangene Gesprächssignal und das Signal auf Grund des selbst Gesprochenen in gleich guter Qualität aufzuzeichnen.

Fig.1

EP 0 140 040 A1

- 1 -

## BESCHREIBUNG

Anschlußschaltung für ein Telefongespräch-Aufzeichnungsgerät

### TECHNISCHES GEBIET

Die Erfindung betrifft eine Anschlußschaltung zum Verbinden eines Aufzeichnungsgerätes mit einem Telefon, mit einer Ein/ Aus-Schaltung für den Antrieb des Gerätes.

### STAND DER TECHNIK

Aufzeichnungsgeräte, die mit einem Telefon verbunden werden können, sind im wesentlichen in zwei Ausführungsformen bekannt. Die eine Ausführungsform sind sogenannte Anrufbeantworter. Diese sind an einen im Telefonapparat vorhandenen Kontakt angeschlossen, der bei aufgelegtem Hörer geschlossen, bei abgenommenem Hörer aber geöffnet ist. Wenn der Anrufbeantworter eingeschaltet ist, nimmt er jedes ankommende Gespräch auf, solange der Hörer auf der Gabel liegt. Sowie der Hörer abgenommen wird, wird die Aufzeichnung beendet. Es liegt also eine Anschlußschaltung vor, die ein Gespräch entweder auf ein Aufzeichnungsgerät, nämlich den Anrufbeantworter, oder auf den Telefonhörer gibt. Dies ist insofern von Nachteil, als es nicht möglich ist, ein über den Telefonhörer geführtes Gespräch auszuzeichnen.

Die zweite bekannte Ausführungsform umgeht den soeben beschriebenen Nachteil. Es handelt sich hier um Telefonaufzeichnungsgeräte, die an den Hörer des Telefonapparates angeschlossen sind. Mit fast allen üblichen Bürodiktiergeräten ist eine solche Telefonaufzeichnung möglich. Dazu weisen diese Geräte eine Telefonaufnahmetaste auf, bei deren

Betätigen der Antriebsmechanismus des Aufzeichnungsgerätes in Gang gesetzt wird und das Telefongespräch über die Verbindung zum Hörer aufgezeichnet wird. Diese Geräte haben den Nachteil, daß im Regelfall die Information gleich zu Beginn eines Telefongespräches beim Abheben des Hörers verloren geht, da das Gerät von der Bedienperson häufig nicht zugleich mit dem Abheben des Hörers eingeschaltet wird. Die zu Beginn eines Telefongespräches anfallende Information ist aber im Regelfall besonders wichtig. Hier nennt die anrufende Person ihren Namen und ihren Wunsch. Sind derartige Daten vom Büropersonal aufzuzeichnen, so sind die Daten, wenn sie auf ein Tonaufzeichnungsgerät aufgenommen werden sollen, alle nochmals zu wiederholen oder sie sind nochmals zu wiederholen, um schriftlich notiert zu werden. In beiden Fällen erhöht sich die Dauer des Telefongesprächs erheblich, was zu erhöhter Gebührenbelastung führt. Außerdem kommt es häufig beim schriftlichen Aufzeichnen vor, daß wichtige Information nicht notiert wird.

DARSTELLUNG DER ERFINDUNG

Der Erfindung liegt die Aufgabe zugrunde, eine Anschlußschaltung zum Verbinden eines Aufzeichnungsgerätes mit einem Telefon anzugeben, die so ausgestaltet ist, daß jedes eingehende und/oder jedes ausgehende Telefongespräch zumindest in seinen Anfangsteilen vollautomatisch aufgezeichnet wird.

Die Erfindung ist durch die Merkmale des Hauptanspruchs gegeben. Vorteilhafte Ausgestaltungen sind Gegenstand von Unteransprüchen. Die Lehren der Unteransprüche können beliebig miteinander kombiniert werden.

Die erfindungsgemäße Anschlußschaltung zeichnet sich dadurch aus, daß die Ein/Aus-Schaltung zum Einschalten des Antriebs des Aufzeichnungsgerätes ein Relais aufweist, das in die Amtsleitung vor dem Telefon geschaltet ist. Dadurch zieht das Relais bei jedem Abheben des Telefon-

- 3 -

aufgrund des dann schließenden Schleifenstromes, hörers an, sei es zum Empfangen eines Gespräches oder zum Anwählen eines Partners. Damit läuft aber der Antrieb, sowie der Telefonhörer abgehoben ist, wodurch sichergestellt ist, daß jedes Gespräch von Anfang an aufgezeichnet wird. Die erfindungsgemäße Anschlußschaltung zeichnet sich weiterhin dadurch aus, daß das Aufzeichnungsgerät vor das Telefon geschaltet ist, im Gegensatz zu den Aufzeichnungsgerätenmit Telefonaufnahmetaste, bei denen der Anschluß über den Hörer erfolgt. Durch das Anschließen vor dem Telefon, also direkt an die Amtsleitung, ist die bestmögliche akustische Ankopplung gewährleistet.

Der Antrieb des Gerätes bleibt so lange eingeschaltet, wie das Relais angezogen bleibt, also so lange der Hörer nicht wieder aufgelegt wird. Dadurch wird nicht nur die Anfangsphase eines jeden Gespräches, sondern jedes Gespräch in voller Länge aufgezeichnet. Gemäß einer vorteilhaften Ausgestaltung zeichnet sich eine erfindungsgemäße Schaltung dadurch aus, daß sie einen Zeitgeber aufweist, der den Antrieb nach einer einstellbaren Zeit wieder unterbricht. Gemäß einer anderen vorteilhaften Ausführungsform weist die Schaltung eine Unterbrechungstaste auf, durch die der Antrieb so lange angehalten wird, bis der Hörer wieder aufgelegt und für den nächsten Anruf wieder abgehoben wird. Durch diese Ausführungsform ist es möglich, nur den wichtigen Anfangsteil jedes Gespräches aufzuzeichnen und im übrigen Bandkapazität für weitere Aufzeichnungen zu sparen.

Bandkapazität läßt sich auch dadurch sparen, daß nicht grundsätzlich alle Gespräche aufgezeichnet werden, sondern daß festgelegt werden kann, daß nur ankommende oder nur ausgehende Gespräche aufgezeichnet werden. Dazu liegt eine Selektionsschaltung vor, die aufgrund der unterschiedlichen auftretenden Tonsignale in den beiden Fällen unterscheidet, ob ein Ruf ankommt oder ausgeht.

Oft ist es beim Aufzeichnen eines Gespräches von Interesse, wann das Gespräch begonnen und/oder wann es geendet hat. Um dies zu ermöglichen, verfügt die erfindungsgemäße Schaltung über einen Sprachsynthesizer, der auf ein Startsignal hin die Uhrzeit durchsagt. Dieses Startsignal wird beim Abheben und/oder beim Auflegen des Hörers abgegeben. Tritt das Startsignal beim Auflegen des Hörers auf, so wird eine Verzögerungsschaltung in Gang gesetzt, die den Antrieb noch einige Zeit in Betrieb hält. Wenn dabei die Verzögerungszeit, während der der Antrieb noch läuft, größer ist als die Durchsagezeit, so ergibt sich eine Aufzeichnung ohne Inhalt, z. B. ein unbesprochenes Bandstück. Dieser Leerbereich kann z. B. bei einem Bandsuchlauf vorteilhafterweise zum Auffinden des Endes eines Gespräches und des Anfangs eines neuen Gespräches verwendet werden. Mit einem Sprachsynthesizer ist es auch möglich, andere Durchsagen auf das Band zu sprechen. Dabei ist es jeweils von Vorteil, wenn der Sprachsynthesizer während seiner Ansage das NF-Telefonsignal abschaltet und sein eigenes Ansagesignal auf die Aufzeichnungseinrichtung schaltet.

KURZE BESCHREIBUNG DER FIGUREN

Die Erfindung wird im folgenden anhand von Figuren näher veranschaulicht. Es zeigen:

Fig. 1    ein schematisches Blockschaltbild einer mit einem Fernmeldeamt in Verbindung stehenden Anschlußschaltung zum Verbinden eines Aufzeichnungsgerätes mit einem Telefon;

Fig. 2        ein Schaltbild der Ansteuerung eines Relais in
              einer anmeldegemäßen Anschlußschaltung;

Fig. 3        eine Eingangsschaltung als Teil einer anmeldegemäßen Anschlußschaltung;

Fig. 4        eine Selektionsschaltung zum Auswählen, ob keine
              Gespräche, nur ausgehende, nur ankommende Gespräche oder sowohl ausgehende wie ankommende
              Gespräche aufgezeichnet werden sollen; und

Fig. 5        eine Schaltung mit einem Sprachsynthesiser, der
              eine Ansage auf das Aufzeichnungsgerät spricht.

WEGE ZUM AUSFÜHREN DER ERFINDUNG

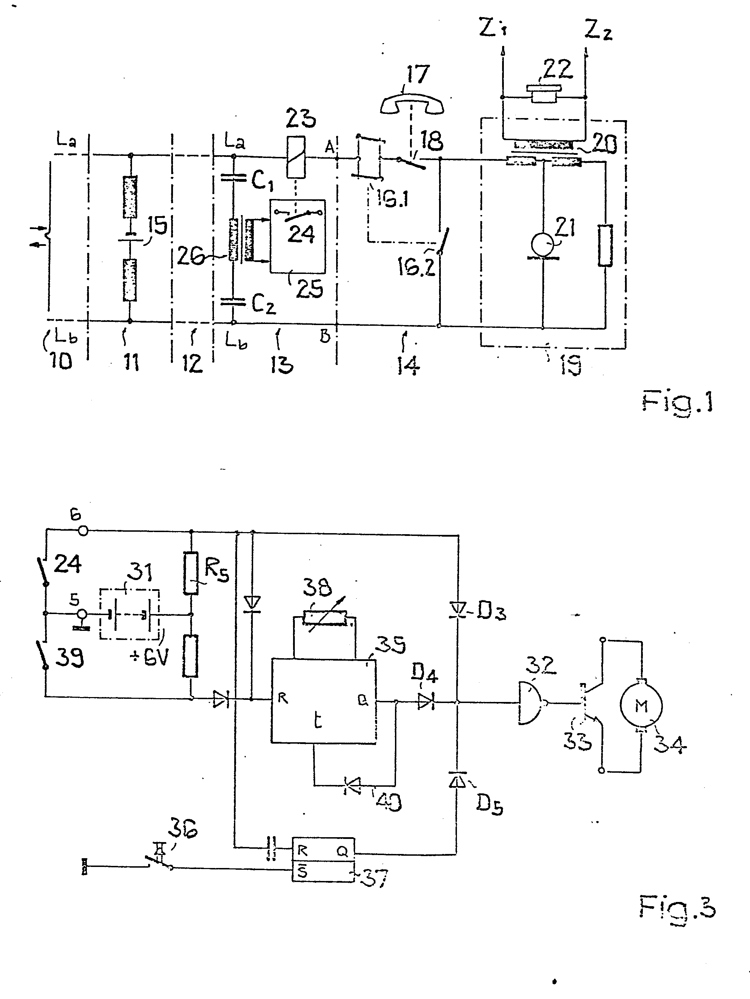

Das Schaltbild gemäß Fig. 1 ist in fünf Abschnitte 10 - 14
unterteilt. Von einem Fernmeldeamt 11 gehen Verbindungsleitungen 10 zu einem beliebigen Fernsprechteilnehmer und
Verbindungsleitungen 12 zu einem Telefonapparat 14, der über
ein Aufzeichnungsgerät mit Anschlußschaltung 13 verfügt. Die
Leitungen 10 und 12 vom Fernmeldeamt 11 aus weisen jeweils
zwei einzelne Amtsleitungen $L_a$ und $L_b$ auf. Diese Leitungen
stehen unter einer Gleichspannung, die von einer Batterie 15
im Fernmeldeamt geliefert wird. Das Fernmeldeamt gibt weiterhin einen Gebührenimpuls von 16 kHz, Rufwechselstrom für die
Telefonklingel von 50 Hz, ein Amts- und Ruftonsignal von etwa
440 Hz und das niederfrequente Gesprächssignal von etwa
350 - 3500 Hz ab. Von einer Wählschaltung 16.1 und 16.2 im
Telefonapparat 14 gelangen niederfrequente Wahlimpulse auf
das Leitungsnetz.

Wird auf das Ertönen eines Klingelzeichens hin der Telefonhörer 17 von seiner Gabel abgehoben, so wird ein Gabelschalter 18 geschlossen und das Gesprächssignal gelangt in eine sogenannte Gabelschaltung 19. Diese weist einen Übertrager 20 mit primärseitig unterteilten Wicklungen auf.
Zwischen den Unterteilungspunkt und die Amtsleitung $L_b$ ist
ein Mikrofon 21 geschaltet. Diese bei jedem Telefonapparat
vorhanden Gabelschaltung 19 dient dazu, ein über die Leitungen $L_a$ und $L_b$ empfangenes Gesprächssignal in voller
Stärke auf einen an die Sekundärseite des Übertrages 20
angeschlossenen Hörer 22 zu übertragen, das im Mikrofon 21
erzeugte Signal jedoch nur schwach an den Hörer 22 wiederzugeben.

Der Hörer 22 weist zwei Anschlüsse Z1 und Z2 auf. An diese
ist der Tonaufzeichnungsteil bisher bekannter Aufzeichnungsgeräte angeschlossen. Der Antrieb solcher Aufzeichnungsgeräte wird dadurch in Gang gesetzt, daß willkürlich eine
Telefonaufnahmetaste betätigt wird. Bei Anrufbeantwortern
wird der Antrieb dadurch in Bewegung gesetzt, daß der Rufwechselstrom für die Klingel detektiert wird. Ein Aufzeichnungsgerät mit anmeldegemäßer Anschlußschaltung 13 ist demgegenüber vor das Telefon geschaltet und zum Einschalten
des Antriebes wird der Gleichstrom ausgenutzt, der beim Ab- (Schleifenstromkennung)
heben des Hörers 17 bei geschlossenem Gabelschalter 18 aufgrund der durch die Batterie 15 gelieferten Gleichspannung
fließt. Der Gleichstrom durchfließt ein in die Leitung $L_a$
gelegtes Relais 23, das auf einen Ein/Ausschalter 24 im
Aufzeichnungsgerät 25 wirkt. Beim Anziehen des Relais 23
wird der nicht näher dargestellte Antrieb des Gerätes über
den Ein/Ausschalter 24 eingeschaltet. Das niederfrequente
Gesprächssignal wird von einem Gesprächsübertrager 26 abgegriffen, der über Kondensatoren C1 und C2 mit der Amtsleitung $L_a$ bzw. $L_b$ verbunden ist. Diese direkte Ankopplung
hat denVorteil, daß das empfangene wie auch das eigene Gespräch gleichgut aufgezeichnet wird.

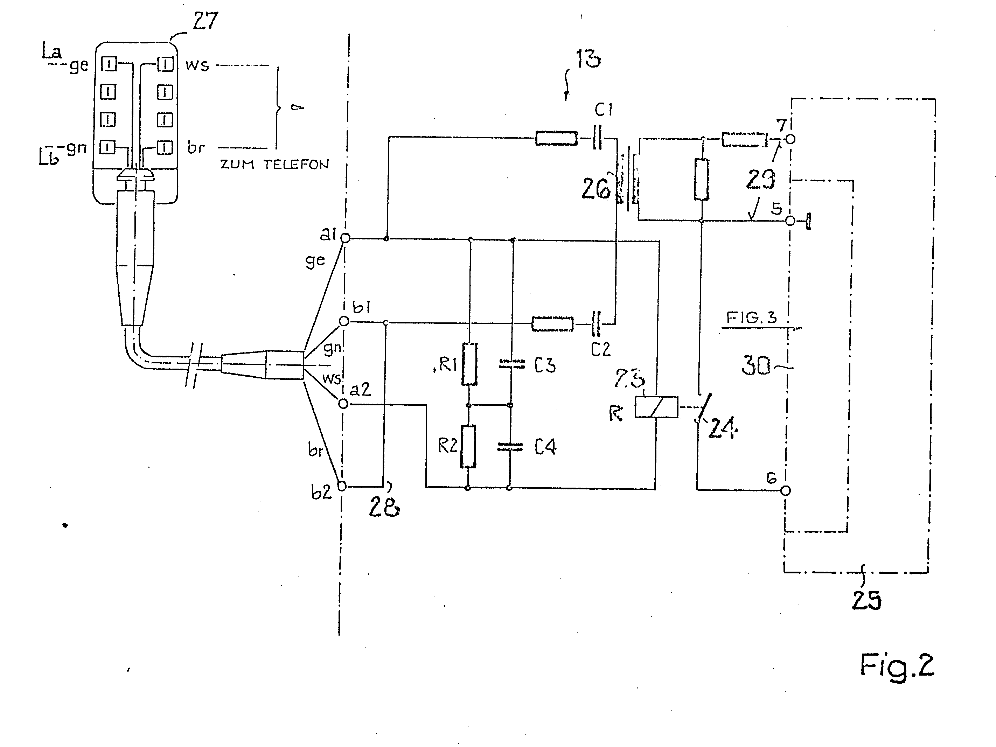

Der Anschluß des Relais 23 (R) ist in Fig. 2 ausführlicher dargestellt. Vom Amt her kommend gelangen die Signale von den beiden Leitungen $L_a$ und $L_b$ über einen Stecker 27 in die rechts von der strichpunktierten Linie dargestellte Anschlußschaltung 13, und zwar an deren Anschlüsse a1 und b1. Von Anschlüssen a2 und b2 gelangen Ausgangssignale von der Anschlußschaltung 13 über den Stecker 27 zum Telefon. Dabei ist der Anschluß b1 mit dem Anschluß b2 über eine Brücke 28 kurzgeschlossen. Im Verbindungsweg zwischen dem Eingang a1 und dem Ausgang a2 liegt dagegen das Relais 23. Dieses ist so ausgelegt, daß es die Batterie 15 im Fernmeldeamt 11 kaum belastet. Wie oben erwähnt, laufen über die Leitungen $L_a$ und $L_b$ auch verschiedene Wechselspannungssignale. Diese würden durch die Induktivität des Relais 23 gesperrt. Daher liegt parallel zum Relais 23 eine Kapazität C3 und C4 von mindestens 10 uF, vorzugsweise 20 uF. Die Kapazität ist durch zwei gegeneinander geschaltete Elektrolytkondensatoren C3 und C4 von jeweils 10 uF gebildet. zu denen jeweils ein Widerstand von 100 kOhm parallel liegt.

Der Gesprächsübertrager 26 (Ü1) mit den beiden Kondensatoren C1 und C2 liegt zwischen den Anschlüssen a1 und b2. Die Ausgangsleitungen 29 des Gesprächsübertragers 26 sind an Anschlüssen 5 und 7 in das Aufzeichnungsgerät 25 geführt, von denen der Anschluß 5 dem Relais 23 gemeinsam ist. Der Anschluß 5 liegt an Masse.

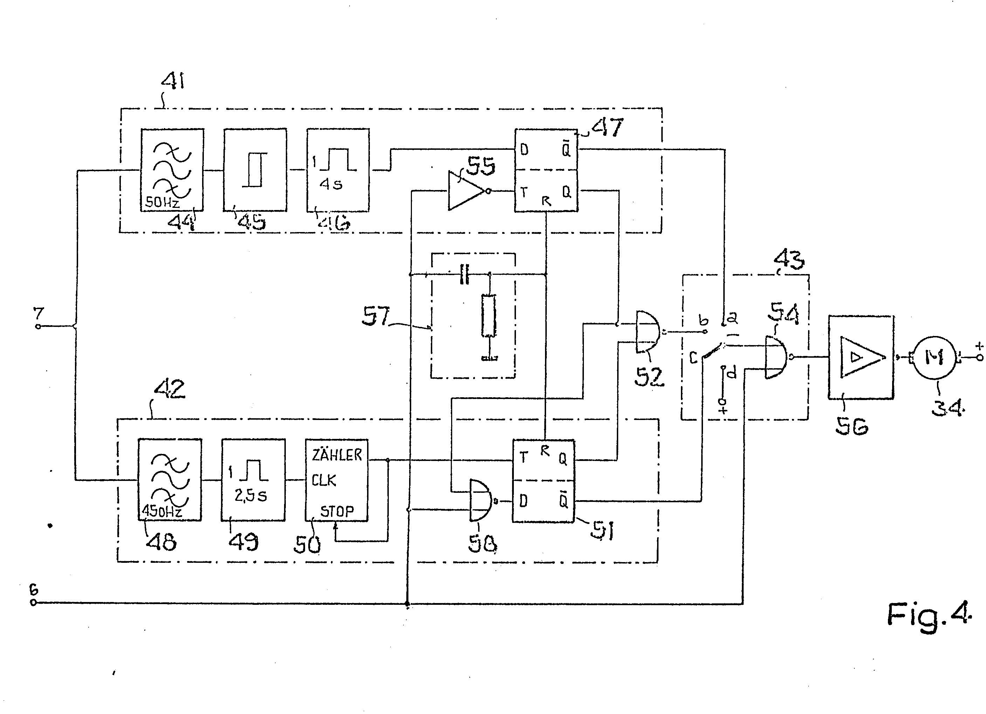

Die beiden Anschlüsse 5 und 6 des Relais 23 stehen mit einer Eingangsschaltung 30 des Aufzeichnungsgerätes 25 in Verbindung. Diese Eingangsschaltung ist in Fig. 3 genauer dargestellt.

- 8 -

Der Anschluß 5 der Eingangsschaltung 30 steht mit dem Masseanschluß einer Spannungsquelle 31 direkt in Verbindung. Der Anschluß 6 steht über einen Widerstand R5 mit dem Pluspol der Spannungsquelle 31 von 6 V und über eine Diode D3 und einen Inverter 32 mit der Basis eines Transistors 33 in Verbindung. Bei einem Signal von hohem Pegel, also einem Signal von niedrigem Pegel am Eingang des Inverters 32 ist der Transistor 33 leitend und versorgt dann einen Antriebsmotor 34 mit Spannung.

Wenn der durch das Relais 23 betätigte Ein/Ausschalter 24 geöffnet ist, liegt die Spannung von + 6 V am Inverter 32, wodurch der Transistor 33 gesperrt wird. Ist der Ein/Ausschalter geschlossen, so liegt Massepotential am Inverter 32, wodurch der Motor 34 so lange läuft, bis wieder ein positives Signal am Eingang des Inverters 32 ansteht. Dieses positive Signal kann entweder dadurch auftreten, daß der Ein/Ausschalter 24 wieder öffnet, daß ein Zeitgeber 35 über eine Diode D4 oder ein durch Betätigen einer Unterbrechungstaste 36 gesetztes Flip-Flop 37 über eine Diode D5 ein positives Signal an den Inverter 32 gibt.

Der Zeitgeber 35 ist über ein Einstellglied 38, hier einen veränderbaren Widerstand in seiner Zeit einstellbar, z. B. zwischen 30 Sekunden und 4 Minuten. Der Zeitgeber kann auch ganz ausgeschaltet werden. Wenn der Zeitgeber auf eine bestimmte Zeit eingestellt ist, wird er dadurch gesetzt, daß an seinem Rücksetzeingang R Massepotential angelegt wird. Dies erfolgt immer dann, wenn nach dem Schließen einer Aufnahmetaste 39 der Telefonhörer 22 abgenommen wird und damit der Ein/Ausschalter 24 schließt. Die Aufnahmetaste 39 ist nämlich ebenfalls so mit der Spannungsquelle 31 verbunden, daß sie im betätigten Zustand für eine Verbindung des Rücksetzanschlusses R mit Masse sorgt. Wenn die Aufnahmetaste 39 und/oder der Ein/Ausschalter 24 geöffnet sind, liegt also eine Spannung von + 6 V am Rücksetzeingang R an, was dazu führt, daß der Zeitgeber 35 nicht gesetztwird und damit dauernd ein Signal von niedrigem Pegel an den Inverter 32 gibt. Sowie dagegen sowohl die Aufnahmetaste 39 und der Ein/Ausschalter 24 geschlossen sind, beginnt die im Zeitgeber 35 gesetzte Zeit abzulaufen. Bei Ablaufen der Zeit gibt der Zeitgeber 35 ein positives Signal an den Inverter 32, wodurch der Transistor 33 gesperrt wird und dadurch der antreibende Motor 34 zum Stillstand kommt. Durch das positive Signal wird der Zeitgeber 35 über eine Rückkopplungsleitung 40 gesperrt.

Durch den Zeitgeber 35 ist es also möglich, ein Gespräch ab dem Abheben des Hörers 22 und damit dem Einschalten des Ein/Ausschalters 34 für eine vorgegebene Zeit aufzuzeichnen. Dadurch ist es möglich, von allen abgehenden und ankommenden Gesprächen zum Beispiel die ersten 60 Sekunden aufzuzeichnen, so daß sich eine abwesende Person nach Rückkehr leicht einen Überblick darüber verschaffen kann, wie viele und was für Gespräche während ihrer Abwesenheit geführt worden sind.

Wenn ein privates Gespräch geführt werden soll, ist es erwünscht, den Antrieb des Aufzeichnungsgerätes nicht laufen zu lassen, also ein positives Signal auf den Inverter 32 zu geben. Dazu dienen die Unterbrechungstaste 36 und das Flip-Flop 37. Das Flip-Flop 37 weist einen Rücksetzeingang R und einen negierten Setzeingang $\overline{S}$ auf. Der Rücksetzeingang R ist mit dem Ein/Ausschalter 24 verbunden, so daß bei dessen Betätigen das Flip-Flop 37 gesetzt wird und an seinem Ausgang Q ein Signal von niedrigem Pegel ansteht. Durch Betätigen der Unterbrechungstaste 36 wird das Flip-Flop 37 gesetzt, wodurch der Ausgang Q ein positives Signal an den Inverter 32 liefert, so daß der antreibende

Motor 34 durch entsprechende Ansteuerung über den Transistor 33 zum Stillstand kommt. Dieser Stoppzustand bleibt so lange erhalten, bis durch Öffnen des Ein/Ausschalters 24 ein wieder Schließen desselben das Flip-Flop 37 wieder rückgesetzt wird.

Die Schaltung gemäß Fig. 4 zum Auswählen, ob nur ankommende, nur ausgehende oder sowohl ankommende als auch ausgehende Gespräche aufgezeichnet werden sollen, umfaßt eine Eingangsselektionsschaltung 41, eine Ausgangsselektionsschaltung 42 und eine Wählschaltung 43. Die Eingangsselektionsschaltung verfügt über einen 50 Hz-Bandpaß 44, einen Impulsformer 45, ein erstes Monoflop 46 und ein erstes Selektions-Flip-Flop 47. Die Ausgangsselektionsschaltung 42 umfaßt einen 450 Hz-Bandpaß 48, ein zweites Monoflop 49, einen Zähler 50 und ein zweites Selektions-Flip-Flop 51. Die Wählschaltung weist ein erstes NOR-Glied 52, einen Schalter 53 mit vier Schaltstellungen a, b, c und d, sowie ein zweites NOR-Glied 54 auf.

Der 50 Hz-Bandpaß 44 steht über den in Fig. 2 eingezeichneten Anschluß 7, an dem das niederfrequente Gesprächssignal ansteht, in Verbindung. Der Bandpaß läßt das Signal des Rufwechselstromes von 50 Hz an den Impulsformer 45 durch, der a als Schmitt-Trigger oder als Monoflop ausgebildet ist. Die Impulse vom Impulsformer 45 werden an das erste Monoflop 46 gegeben, das eine Abfallzeit von 4 Sekunden aufweist. Das Monoflop gibt ab dem ersten Rufwechselstrompaket ein Signal hohen Pegels an seinem Ausgang ab. Von Rufwechselstrompaket zu Rufwechselstrompaket besteht eine Zeitdifferenz von etwa 3 Sekunden. Da die Abfallzeit des ersten Monoflops 46 länger ist als der Abstand der Rufwechselstrompakete untereinander, bleibt es dauernd durchgeschaltet, solange ein Gespräch ankommt. Das Ausgangssignal vom ersten Monoflop 46 steht als Datensignal am ersten Selektions-Flip-Flop 47 an. Wird nun
der Hörer abgenommen, so geht das Gabelkontaktsignal am Anschluß 6 (Fig. 2) von hohem auf niedrigen Pegel. Das Gabelkontaktsignal wird durch einen Inverter 55 invertiert als
Taktsignal an den Takteingang T des ersten Selektions-Flip-
Flops 47 gegeben, woraufhin dieses den Datenwert übernimmt
und an seinem Ausgang $\overline{Q}$ ein Signal niedrigen Pegels ausgibt.
Der Ausgang $\overline{Q}$ ist mit dem Kontakt a des Schalters 53 verbunden.

Steht der Schalter 53 auf dem Kontakt a, so wird ihm nach
dem Detektieren eines ankommenden Gespräches durch die Eingangsselektionsschaltung 41 das Eingangsselektionssignal
niedrigen Pegels zugeführt, so gibt er dieses Signal an
einen Eingang des zweiten NOR-Gliedes 54. Dem anderen Eingang wird das Gabelkontaktsignal zugeführt. Ist der Hörer
aufgelegt, ist das Gabelkontaktsignal hoch, woraufhin das
zweite NOR-Glied 54 ein Signal niedrigen Pegels an seinem
Ausgang abgibt. Wird dagegen der Hörer abgenommen, so geht
das Gabelkontaktsignal auf niedrigen Pegel über, woraufhin
das zweite NOR-Glied 54 ein Signal hohen Pegels abgibt, da
ja an seinem anderen Eingang das Eingangsselektionssignal
niedrigen Pegels ansteht. Dieses Ausgangssignal der Wählschaltung wird an den Verstärker 56 zum Antreiben des Motores 34 zugeführt.

Wird der Hörer wieder aufgelegt, so steht am einen Eingang
des zweiten NOR-Gliedes 54 direkt wieder ein Signal hohen
Pegels an, woraufhin das NOR-Glied ein Signal niedrigen Pegels an den Verstärker 56 abgibt und dadurch der Motor 34
zum Stillstand kommt. Gleichzeitig wird über das Differenzierglied 57 beim Übergang des Gabelkontaktsignals von niedrigem auf hohen Pegel ein positiver Rücksetzimpuls an den
Rücksetzeingang R des ersten Selektions-Flip-Flops 47 gegeben. Dadurch geht auch das Eingangsselektionssignal vom Ausgang $\overline{Q}$ auf hohen Pegel, während das Signal am Ausgang Q auf hohen Pegel geht.

Dem 450 Hz-Bandpaß 48 in der Ausgangsselektionsschaltung 42 wird wie dem 50 Hz-Bandpaß 44 das Signal vom Anschluß 7 zugeführt. Der 450 Hz-Bandpaß 48 läßt das Amtssignal und das gleichfrequente Ruftonsignal durch. Beim Ruftonsignal handelt es sich um Signalpakete, die unterschiedlich voneinander beabstandet sind, je nachdem, ob der Teilnehmer frei oder belegt ist. Das Signal vom 450 Hz-Bandpaß 48 wird an das zweite Monoflop 49 gegeben. Dessen Abfallzeit beträgt 2,5 Millisekunden. Es gibt also dauernd ein Signal hohen Pegels an seinem Ausgang ab, wenn ein Signal von etwa 450 Hz am Bandpaß 48 ansteht. Das Ausgangssignal vom zweiten Monoflop 49 wird dem Zähler 50 zugeführt, der beim Zählwert "2" ein Signal hohen Pegels an seinem Ausgang abgibt. Wird der Telefonhörer abgenommen, so empfängt die Schaltung zunächst den Amtston, der so lange ansteht, bis mit dem Wählen begonnen wird. Der Zähler zählt also auf den Zählwert "eins". Wird dann der Teilnehmer erreicht, so ertönt das Ruftonsignal, woraufhin das zweite Monoflop 49 zum zweitenmal ein Signal hohen Pegels abgibt. Der Zähler 50 erreicht damit seinen Zählwert "zwei" und gibt sein Ausgangssignal hohen Pegels an den Takteingang T des zweiten Selektions-Flip-Flops 51. Dabei wird das am Dateneingang D anstehende Signal übernommen. Der Dateneingang D erhält sein Signal von einem dritten NOR-Glied 53, dem an seinem einen Eingang das Gabelkontaktsignal vom Anschluß 6 und an seinem anderen Eingang das Signal vom Anschluß Q des ersten Selektions-Flip-Flops 47 zugeführt wird. Es sei daran erinnert, daß das Ausgangssignal vom Ausgang Q des ersten Selektions-Flip-Flops 47 solange null ist, wie es rückgesetzt ist. Nur wenn ein ankommendes

- 13 -

Gespräch detektiert ist, nimmt das Ausgangssignal vom Ausgang Q hohen Pegel ein. Am Dateneingang D des zweiten Selektions-Flip-Flops 51 steht also über das dritte NOR-Glied 52 ein Signal hohen Pegels an, wenn das erste Selektions-Flip-Flop 47 kein ankommendes Gespräch registriert hat und wenn der Telefonhörer abgehoben ist.

Wenn das zweite Selektions-Flip-Flop 51 an seinem Dateneingang den Datenwert hohen Pegels übernommen hat, geht das an seinem Ausgang $\overline{Q}$ abgegebene Ausgangsselektionssignal auf niedrigen Pegel. Dieses Signal kann durch den Schalter 53 am Abgriff c abgegriffen werden. Der Motor 34 wird dann entsprechend eingeschaltet, wie dies anhand des Eingangsselektionssignales weiter oben beschrieben ist.

Wird ausgehend von diesem Zustand des laufenden Motors 34 das ausgehende Gespräch beendet, wird also der Hörer 17 aufgelegt, so geht das Gabelkontaktsignal vom Anschluß 6 von niedrigem auf hohen Pegel. Es tritt dann wieder das Rücksetzsignal vom Differenzierglied 57 auf. Dieses Rücksetzsignal wird dem Rücksetzeingang R des zweiten Selektions-Flip-Flops 51 zugeführt. Beim Rücksetzen dieses Flip-Flops geht das Ausgangsselektionssignal vom Ausgang $\overline{Q}$ auf hohen Pegel über, wodurch der Motor 34 abgeschaltet wird, wie dies oben anhand des Übergangs des Eingangsselektionssignals von niedrigem auf hohen Pegel beschrieben worden ist.

Am Abgriff b des Schalters 53 läßt sich einstellen, daß sowohl ankommende wie auch abgehende Gespräche aufgezeichnet werden. Der Abgriff b ist mit dem Ausgang des ersten NOR-Gliedes 52 verbunden, dessen einem Eingang das Signal vom Ausgang Q des ersten Selektions-Flip-Flops 47 und dessen anderem Eingang das Signal vom Ausgang Q des zweiten Selektions-Flips-Flops 51 zugeführt wird. Eines dieser beiden Signale nimmt immer hohen Pegel ein, so daß am Ausgang des NOR-Gliedes 52 immer ein Signal niedrigen Pegels abgegeben wird. Der Motor 34 wird dann in der oben beschriebenen Weise wieder über das zweite NOR-Glied 54 beim Abheben des Telefonhörers und damit durch das Gabelkontaktsignal niedrigen Pegels eingeschaltet.

Der letzte Abgriff d des Schalters 53 wird mit positiver Spannung versorgt. Ist der Schalter 53 auf diesen Abgriff d geschaltet, gibt das zweite·NOR-Glied 54 an seinem Ausgang immer ein Signal niedrigen Pegels ab, so daß der Motor 34 nicht anlaufen kann.

Die Eingangsselektionsschaltung ist also, allgemein gesagt, so beschaffen, daß sie das Signal des Rufwechselstromes feststellt und dieses Signal durch ein Monoflop jeweils mindestens für die Zeitdauer hält, um das aufeinanderfolgende Rufwechselstrompakete voneinander beabstandet sind. Im deutschen Telefonnetz beträgt die Frequenz des Rufwechselstromes etwa 50 Hz und der Abstand von Paket zu Paket beträgt etwa 3 Sekunden.

Die Ausgangsselektionsschaltung ist, allgemein gesprochen, so beschaffen, daß sie das Amtstonsignal und die Ruftonsignale detektiert und während des Auftretens eines solchen Signales ein Dauersignal abgibt, was durch das zweite Monoflop 49 bewerkstelligt wird, dessen Haltezeit länger ist als die Schwingungsdauer des Amtstones oder des Ruftones. Im deutschen Telefonnetz beträgt die Frequenz des Ruftones etwa 440 Hz, weswegen das Monoflop bei der beschriebenen Ausführungsform eine Haltezeit von etwa 2,5 Millisekunden aufweist.

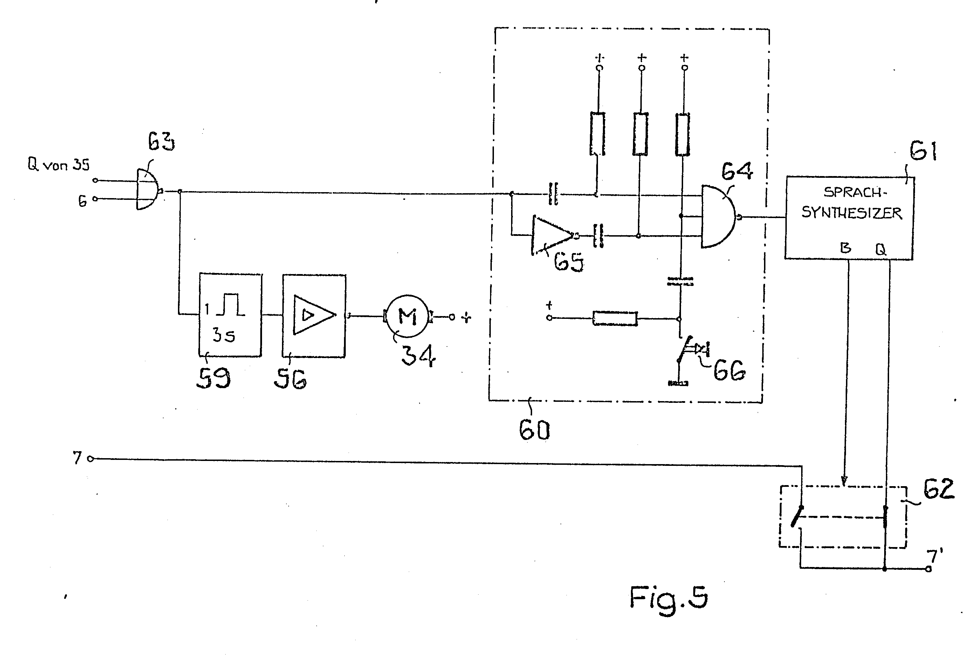

Die Schaltung gemäß Fig. 5 dient dazu, eine Ansage, im Ausführungsbeispiel die Uhrzeit, auf den Aufzeichnungsträger zu sprechen. Sie verfügt dazu über ein als Verzögerungsschaltung dienendes drittes Monoflop 59, eine Startschaltung 60 und einen Sprachsynthesizer 61 mit an diesen angeschlossenem Wechselschalter 62. Das dritte Monoflop 59 und die Startschaltung 60 erhalten ein Signal vom Ausgang eines vierten NOR-Gliedes 63, dessen einem Eingang das Gabelkontaktsignal vom Anschluß 6 und dessen anderem Eingang das Ausgangssignal von einem Timer zugeführt wird, z. B. das Ausgangssignal vom Ausgang Q des Zeitgebers 35 von Fig. 3. Der Zeitgeber gibt an seinem Ausgang Q ein Signal niedrigen Pegels ab, solange die mit ihm gesetzte Zeit noch nicht abgelaufen ist. Das Gabekontaktsignal weist bei abgenommenem Hörer ebenfalls niedrigen Pegel auf. Bei abgenommenem Hörer und noch nicht abgelaufenem Timer gibt daher das vierte NOR-Glied 63 ein Signal positiven Pegels ab. Durch dieses Signal wird das dritte Monoflop 59 gesetzt, das in diesem Zustand ein Signal hohen Pegels an den invertierenden Verstärker 56 abgibt, der wiederum den Motor 34 treibt. Wird bei dieser Ausführungsform der Hörer aufgelegt, wechselt das Signal am vierten NOR-Glied 63 zwar von hohem auf niedrigen Pegel, jedoch steht am Ausgang des dritten Monoflops 59 noch für eine vorgegebene Verzögerungszeit ein Verzögerungssignal hohen Pegels an, so daß der Motor 34 um die Verzögerungszeit von z. B. drei Sekunden nachläuft.

Die Startschaltung 60 verfügt über ein NAND-Glied 64, dem das Signal vom vierten NOR-Glied 63 über eine Impulsschaltung an einem Eingang und über einen zweiten Inverter 65 und eine andere Impulsschaltung an einem zweiten Eingang zugeführt wird. An einem dritten Eingang wird dem NAND-Glied 64 über eine weitere Impulsschaltung ein Impuls zugeführt, der auftritt, wenn eine Uhrabruftaste 66 betätigt wird. Das NAND-Glied 64 ist so beschaltet, daß dann, wenn die Taste 66 betätigt wird oder wenn das Signal vom vierten NOR-Glied 63 seinen Pegel wechselt, der zugehörige der Eingänge einen negativen Impuls erhält, woraufhin es ein Signal hohen Pegels an den Sprachsynthesizer 61 abgibt, der daraufhin an einem Ausgang Q ein Ansagesignal abgibt und während der Ansage an einem Ausgang b ein Busy-Signal abgibt. Durch das Busy-Signal wird der Wechselschalter 62 so umgeschaltet, daß er das Ansagesignal vom Ausgang Q auf einen Anschluß 7' schaltet, der zur Aufzeichnungseinrichtung führt. Gibt die Uhr dagegen kein Busy-Signal ab, so ist der Wechselschalter so umgeschaltet, daß das Signal vom Anschluß 7 (Fig. 2) auf den Anschluß 7' gelegt wird. Dadurch ist gewährleistet, daß immer nur entweder das Gesprächssignal vom Anschluß 7 oder das Ansagesignal vom Ausgang Q des Sprachsynthesizers 61 auf die Aufzeichnungseinrichtung gegeben wird.

Mit dem Abheben des Hörers wird wie bei allen beschriebenen Ausführungsformen der Motor 34 eingeschaltet und gleichzeitig wird das Ansagesignal vom Sprachsynthesizer 61 auf die Aufzeichnungseinrichtung gegeben. Beim Auflegen des Hörers stoppt der Motor nicht sofort, sondern er läuft um die Verzögerungszeit von beispielsweise 3 Sekunden nach, so daß die Ansage vom Sprachsynthesizer, die durch das Auflegen ausgelöst wird, noch aufgezeichnet werden kann. Vorzugsweise ist dabei die Verzögerungszeit länger als die Ansagezeit, so daß sich eine Aufzeichnungslücke ergibt, die beim Verwenden eines Bandes als Aufzeichnungsträger in vorteilhafter Weise für einen Bandsuchlauf verwendet werden kann.

Es ist auch möglich, dem vierten NOR-Glied 63 nicht direkt das Gabelkontaktsignal vom Anschluß 6 zuzuführen, sondern stattdessen das Ausgangssignal vom zweiten NOR-Glied 54 der Schaltung gemäß Fig. 4 zu verwenden. Dann läuft der Motor 34 wieder nicht grundsätzlich mit jedem Hörerabheben an, sondern es hängt von der vorgenommenen Selektion ab, ob er anläuft oder nicht. In allen Fällen ist es möglich, die Uhrzeit zu Beginn und zu Ende eines aufgezeichneten Gespräches aufzuzeichnen. Es ist auch möglich, die Uhrzeit nur zu Beginn oder nur zu Ende eines Gespräches aufzuzeichnen. In diesem Fall steht das NAND-Glied 64 mit dem vierten NOR-Glied 63 nicht sowohl direkt wie auch über den zweiten Inverter 65 in Verbindung, sondern nur entweder direkt, was zum Auslösen der Uhr nur beim Anlaufen des Bandes führt, oder nur über den Inverter, was zur Uhrzeitaufzeichnung nur beim Beenden der Gesprächsaufzeichnung führt.

Der Sprachsynthesizer 61 kann auch andere Daten außer der Uhrzeit angeben, zum Beispiel eine Ankündigung über baldiges Bandende. Dazu wird dem Sprachsynthesizer vorteilhafterweise ein Bandendesignal vom Band des Aufzeichnungsgerätes zugeführt. Da es jedoch ungünstig wäre, die Tatsache des nahenden Bandendes mitten in einem Gespräch anzusagen, ist es von Vorteil, ein Flip-Flop zu verwenden, das durch das Bandendesignal gesetzt wird und dann ein Setzsignal abgibt.Erst wenn dieses Setzsignal beim Beenden des Gespräches mit dem Übergang des Gabelkontaktsignales von niedrigem auf hohen Pegel zusammentrifft, wird die Startschaltung 60 und damit der Synthesizer 61 aktiviert. Damit wird die Ansageüber das Bandende erst nach dem Beendigen einer Gesprächsaufzeichnung angezeigt. Dort kann die Ansage besonders leicht wieder aufgefunden werden, zumal, wenn sie laut ausgegeben wird.

Die Schaltungen der Ausführungsbeispiele der Fig. 3, 4 und 5 können beliebig miteinander kombiniert werden. In Fig. 3 ist eine Timerschaltung dargestellt, die auch in Zusammenhang mit der Selektionsschaltung gemäß Fig. 4 oder der Uhrzeitaufzeichnungsschaltung gemäß Fig. 5 verwendet werden kann. Auch die Schaltungen gemäß den Fig. 4 und 5 können in Kombination miteinander verwendet werden. Statt einer einfachen Unterbrechungsschaltung mit Unterbrechungstaste 36 und Flip-Flop 37 gemäß Fig. 3 kann auch eine etwas umfangreichere Speicherschaltung mit einer Wiedereinschalttaste zusätzlich zur Unterbrechungstaste 36 verwendet werden.

- 1 -

ANSPRÜCHE

1. Anschlußschaltung zum Verbinden eines Aufzeichnungsgerätes (25) mit einem Telefon (14), mit einer Ein/Aus-Schaltung (23, 24; 30) für den Antrieb (34) des Gerätes, d a d u r c h   g e k e n n z e i c h n e t ,   daß

- das Aufzeichnungsgerät (25) vor das Telefon (14) geschaltet ist und

- die Ein/Aus-Schaltung ein Relais (23) aufweist, das zwischen die Amtsleitungsanschlüsse ($a_1$ und $a_2$) geschaltet ist, so daß das Relais beim Abheben des Telefonhörers (22) aufgrund des dann fließenden Netzgleichstromes anzieht und dadurch ein Gabelkontaktsignal abgibt, das den Antrieb (34) in Gang setzt.

2. Schaltung nach Anspruch 1, d a d u r c h   g e k e n n z e i c h n e t ,   daß zum Relais (23) eine Kapazität (C3 und C4) von $> 10$ µF parallel liegt.

3. Schaltung nach Anspruch 1, d a d u r c h   g e k e n n z e i c h n e t ,   daß durch das Gabelkontaktsignal (23) ein Zeitgeber (35) gestartet wird, der bei Ablauf der in ihm durch ein Einstellglied (38) gesetzten Zeit ein den Antrieb (34) stoppendes Zeitablaufsignal abgibt.

4. Schaltung nach Anspruch 1, g e k e n n z e i c h n e t   d u r c h   ein Flip-Flop (37), das durch das Gabelkontaktsignal rückgesetzt und durch das Betätigen einer Unterbrechungstaste (37) gesetzt wird und im gesetzten Zustand ein den Antrieb (34) stoppendes Unterbrechungssignal abgibt.

5. Schaltung nach Anspruch 1, d a d u r c h   g e k e n n z e i c h n e t ,   daß die Ein/Aus-Schaltung eine Selektionsschaltung (Fig. 4) aufweist, mit

- einer Eingangsselektionsschaltung (41), die ankommende Gespräche anhand des niederfrequenten Ruf-

- 2 -

wechselstromes detektiert und im Falle eines ankommenden Gespräches ein Eingangsselektionssignal abgibt,

- einer Ausgangsselektionsschaltung (42), die das Herstellen einer Verbindung aufgrund des Ruftonsignales detektiert und im Falle einer hergestellten Verbindung ein Ausgangsselektionssignal abgibt, und

- einer Wählschaltung, durch die über einen Schalter (53) einstellbar ist, ob bei vorhandenem Gabelkontaktsignal

    a) nur ankommende Gespräche auf ein Eingangsselektionssignal hin,

    b) sowohl ankommende wie auch abgehende Gespräche auf ein Eingangs- bzw. ein Ausgangsselektionssignal hin oder

    c) nur abgehende Gespräche auf ein Ausgangsselektionssignal hin aufgezeichnet werden.

6. Schaltung nach Anspruch 5, d a d u r c h g e - k e n n z e i c h n e t , daß die Ausgangsselektionsschaltung (42) einen Zähler (50) aufweist, der beim Detektieren des Amtstones um einen Schritt hochgezählt wird, und beim ersten Verbindungs-Rufton um einen zweiten Schritt hochgezählt wird und beim diesen Zählwert "zwei" ein Ausgangssignal abgibt, das das Ausgangsselektionssignal triggert und den Zähler rücksetzt.

7. Schaltung nach Anspruch 1, g e k e n n z e i c h n e t d u r c h

- einen Sprachsynthesizer (61) zum Ansagen einer Information auf ein Startsignal hin,

- eine Startschaltung (60), die das Startsignal beim Auftreten und/oder beim Verschwinden des Gabelkontaktsignals hin abgibt, und

- eine Verzögerungsschaltung (59), die nach dem Verschwinden des Gabelkontaktsignals ein Verzögerungssignal vorgegebener Dauer abgibt, während dem der Antrieb (34) noch angetrieben wird.

8. Schaltung nach Anspruch 7, g e k e n n z e i c h - n e t   d u r c h

- ein als Bandaufzeichnungsgerät ausgebildetes Aufzeichnungsgerät,
- ein Flip-Flop, das von einem Bandendesignal vom Band des Bandaufzeichnungsgerätes gesetzt wird und dann ein Setzsignal abgibt, und
- eine so aufgebaute Startschaltung, daß sie beim Verschwinden des Gabelkontaktsignals bei gleichzeitig zugeführtem Setzsignal das Startsignal abgibt.

9. Schaltung nach Anspruch 7, d a d u r c h   g e - k e n n z e i c h n e t ,   daß die Zeitdauer des Verzögerungssignals größer ist als die Dauer der anzusagenden Information..

Fig.1

Fig.3

Fig.2

Fig.4

3/4

Fig.5

**0140040**

Nummer der Anmeldung

**Europäisches Patentamt**

## EUROPÄISCHER RECHERCHENBERICHT

EP 84110502.6

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| A | <u>DE - A - 2 223 243</u> (PIONEER ELECTRONIC)<br><br>* Seite 1, Zeile 1 - Seite 5, Zeile 4; Fig. *<br><br>-- | 1 | H 04 M 1/64<br>H 04 M 11/10 |
| A | <u>GB - A - 1 549 426</u> (ARTHUR WHITEHOUSE)<br><br>* Seite 1, Zeile 9 - Seite 2, Zeile 1; Fig. *<br><br>-- | 1 | |
| A | <u>GB - A - 2 075 307</u> (DICTAPHONE CORPORATION)<br><br>* Seite 1, Zeile 5 - Seite 3, Zeile 12; Fig. 1 *<br><br>---- | 1,5 | |

|  |
|---|
| **RECHERCHIERTE SACHGEBIETE (Int. Cl.4)** |
| H 04 M 1/00<br>H 04 M 11/00<br>H 04 M 15/00 |

Der vorliegende Recherchenbericht wurde für alle Patentansprüche erstellt.

| Recherchenort | Abschlußdatum der Recherche | Prüfer |
|---|---|---|
| WIEN | 05-12-1984 | HAJOS |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82